# EUROPÄISCHE PATENTSCHRIFT

(11) **EP 1 612 418 B1**
(45) Veröffentlichungstag und Bekanntmachung des Hinweises auf die Patenterteilung: **28.02.2007**
(21) Anmeldenummer: 05009756.7
(22) Anmeldetag: 04.05.2005
(51) Int. Cl.: F04B 23/02, B66F 9/22

(54) **Hydraulikaggregat für Flurförderzeuge**
Hydraulic unit for forklift truck
Unité hydraulique pour chariots de manutention

(30) Priorität: 03.07.2004 DE 102004032256
(43) Veröffentlichungstag der Anmeldung: 04.01.2006
(73) Patentinhaber: Jungheinrich Aktiengesellschaft, 22047 Hamburg (DE)
(72) Erfinder: Becker, Marion, Dipl.-Ing., 22848 Norderstedt (DE)
(74) Vertreter: Hauck, Graalfs, Wehnert, Döring, Siemons

(56) Entgegenhaltungen:
- EP-A- 1 004 542
- WO-A-03/080216
- DE-A1- 10 005 777
- DE-A1- 19 612 582
- DE-A1- 19 910 821
- DE-B- 1 012 256
- DE-U1- 20 319 203

## Beschreibung

Die Erfindung bezieht sich auf ein Hydraulikaggregat für ein Flurförderzeug nach dem Oberbegriff des Patentanspruchs 1.

Zum Anheben von Lasten mit Hilfe eines Lastaufnahmemittels sind Flurförderzeuge mit einem Hydraulikaggregat versehen. Es besteht aus einem Antriebsmotor, zumeist einem Elektromotor und einer vom Motor angetriebenen Pumpe sowie einer Ventilanordnung. Im einfachsten Falle wird ein einfach wirkender Hubzylinder betätigt, wobei die Lasthaltung von einem Rückschlagventil übernommen wird, während für das Absenken ein Rücklaufweg von der Ventilanordnung zum Tank freigegeben wird, beispielsweise über das entsperrbare Rückschlagventil.

Es ist bereits bekannt geworden, Motor, Pumpe und Ventilanordnung als Einheit in einem gemeinsamen Gehäuse zusammenzufassen und das Gehäuse unmittelbar auf einen Hydrauliktank zu setzen, aus dem die Pumpe Hydraulikmedium ansaugt. Es ist ferner bekannt, das zurücklaufende Medium beim Absenkvorgang nicht unmittelbar in den Tank einzuleiten, sondern über ein sogenanntes Rücklauffilter.

Ein solches Hydraulikaggregat ist aus der DE 100 05 777 A bekannt.

Es ist ferner bekannt, ein Rücklauffilter derart auszubilden, daß ein längliches Filtergehäuse (Glocke) über eine Öffnung in den Hydrauliktank eingeführt wird, das ein Filterelement enthält. Von der Ventilanordnung des Hydraulikaggregats führt ein Schlauch zu einem Schlauchanschluß des Filtergehäuses, entweder durch den Tankdeckel hindurch, der die Öffnungsdichtung verschließt oder auch über einen seitlichen Anschluß der mit einem Gehäuse ausgebildet ist, das seinerseits oberhalb der Öffnung am Tank befestigt ist. Ein derartiges Rücklauffilter hat jedoch einige Nachteile. Durch die außen liegenden Anschlüsse des Schlauches zwischen dem Hydraulikaggregat und dem Rücklauffilter ergeben sich Leckagemöglichkeiten.

Ferner muß bei einem Filterwechsel der Rücklaufschlauch gelöst werden. Für die Abdichtung zwischen dem Rücklaufschlauch und dem Tank bzw. dem Filtergehäuse sind mindestens zwei Dichtringe erforderlich. Außerdem erfordert das bekannte Rücklauffilter eine relativ hohe Anzahl von Einzelteilen.

Der Erfindung liegt die Aufgabe zugrunde, ein Hydraulikaggregat für Flurförderzeuge zu schaffen, bei dem die oben genannten Nachteile nicht auftreten und bei dem der bauliche und der Handhabungsaufwand verringert wird.

Diese Aufgabe wird durch die Merkmale des Patentanspruchs 1 gelöst.

Bei der Erfindung befindet sich der Rücklaufschlauch innerhalb des Tanks. Ein Schlauchanschluß ist am Filtergehäuse innerhalb des Tanks vorgesehen.

Für die Erstellung einer derartigen Filtervorrichtung sind lediglich drei Teile erforderlich, nämlich Filtergehäuse, Deckel und Filterelement. Dies allerdings nur dann, wenn ein Schlauchanschlußstutzen gemäß einer Ausgestaltung der Erfindung einteilig mit dem Filtergehäuse geformt ist.

Vorteilhaft ist ferner, daß bei einem Filterwechsel der Rücklaufschlauch nicht gelöst werden muß. Es ist lediglich erforderlich, den Tankdeckel von einem Schraubstutzen des Tanks abzuschrauben, um das Filterelement herauszunehmen. Bei einem Leck im Bereich des Rücklaufschlauches tritt das Hydraulikmedium in den Tank ein und gelangt nicht in die Umgebung. Für eine Abdichtung zwischen Tank und Filter ist lediglich eine einfache O-Ringabdichtung erforderlich.

Die Erfindung wird nachfolgend anhand von in Zeichnungen dargestellten Ausführungsbeispielen näher erläutert.
- Fig. 1: zeigt perspektivisch ein Hydraulikaggregat nach der Erfindung.
- Fig. 2: zeigt eine Seitenansicht des Hydraulikaggregats nach Fig. 1.
- Fig. 3: zeigt eine um 90° C versetzte Seitenansicht des Hydraulikaggregats nach Fig. 1.
- Fig. 4: zeigt einen Schnitt durch ein Rücklauffilter des Hydraulikaggregats nach den Fig. 1 bis 3.
- Fig. 5: zeigt perspektivisch das Filtergehäuse des Rücklauffilters nach Fig. 4.
- Fig. 6: zeigt einen Schnitt durch eine andere Ausführungsform eines Rücklauffilters.

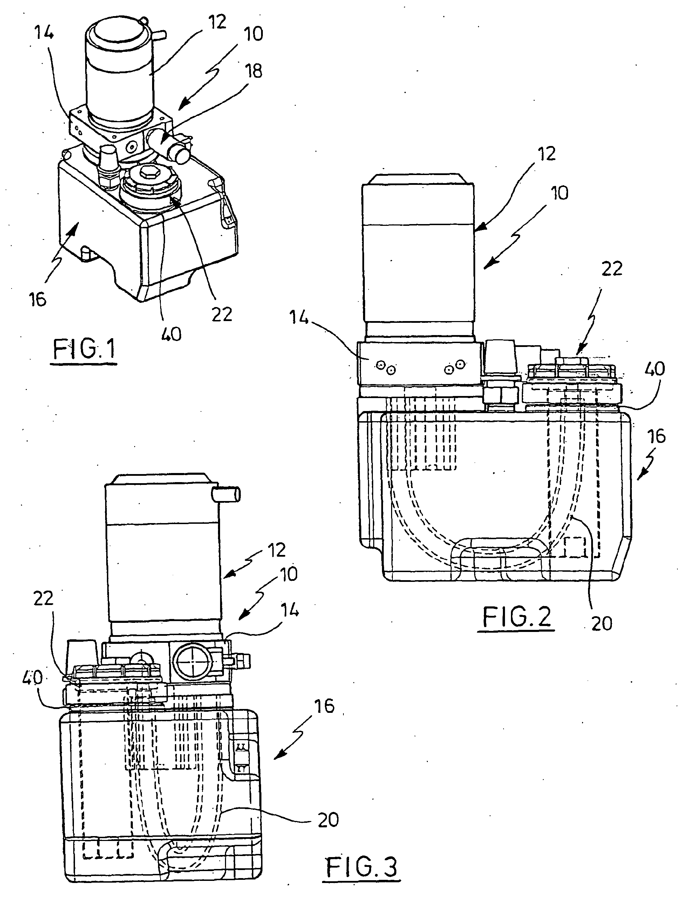

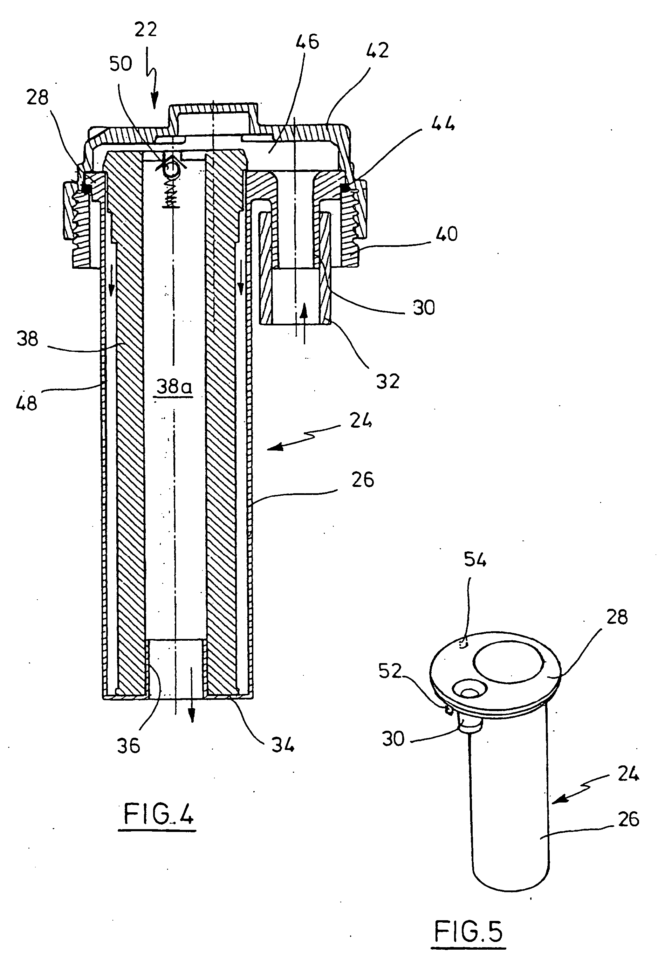

In den Fign. 1 bis 3 ist ein Kompakthydraulikaggregat 10 dargestellt mit einer Motorpumpeneinheit 12, die ein gemeinsames Gehäuse aufweist. An dem Gehäuse der Motorpumpeneinheit 12 ist ein Ventilgehäuse 14 angebracht, über welches die Motorpumpeneinheit 12 auf der Oberseite eines Hydrauliktanks 16 angebracht ist. Am Ventilgehäuse 14 ist ein Magnetventil 18 angebracht. Das beschriebene Hydraulikaggregat dient z.B. zur Betätigung eines Hubzylinders in einem Flurförderzeug (nicht gezeigt). Beim Anschalten des Motors der Motorpumpeneinheit 12 wird das Hydraulikmedium aus dem Tank 16 zum Hubzylinder gefördert. In der Ventilanordnung ist ein Rückschlagventil vorgesehen, das Zurückfließen des Hydraulikmediums verhindert, und den Hubzylinder in der angenommenen Position hält. Bei Betätigung des Ventils 18 strömt das Hydraulikmedium aus dem Hubzylinder zurück, und zwar über einen Schlauch 20, der in den Fig. 2 und 3 gestrichelt dargestellt ist. Der Schlauch befindet sich innerhalb des Tanks 16 und führt zu einer Filtervorrichtung 22, welche anhand der Fig. 4 und 5 näher erläutert werden soll.

Die in Fig. 4 dargestellte Filtervorrichtung, die einen sogenannten Rücklauffilter bildet, weist ein Filtergehäuse 24 auf, das einen länglichen Hülsenabschnitt 26 aufweist, an dem am oberen Ende ein radialer Flansch 28 angeformt ist. An dem Flansch 28 ist seinerseits ein Anschlußstutzen 30 angeformt. Das Filtergehäuse 24 ist einteilig aus Kunststoffmaterial geformt. An dem Stutzen 30 ist bei 32 ein Teil des Rücklaufschlauches 20 zu erkennen.

Der Hülsenabschnitt 26 ist teilweise am unteren Ende bei 34 teilweise geschlossen, wobei im Bereich einer mittigen unteren Öffnung ein nach oben weisender ringzylindrischer Ansatz 36 geformt ist. Ein ringzylindrischer Filtereinsatz 38 befindet sich innerhalb des Filtergehäuses 24, wobei der mittige Durchgang 38a des Filtereinsatzes den zylindrischen Ansatz 36 aufnimmt und das untere Ende des Einsatzes 38 gegen den geschlossenen Bodenabschnitt 34 anliegt. Das obere Ende des Einsatzes hat einen Durchmesser, der etwas größer ist als der Innendurchmesser des Hülsenabschnitts 24.

In Fig. 4 ist auch ein Schraubstutzen 40 zu erkennen, der an der Oberseite des Tanks 16 geformt ist (s. auch Fig. 1 bis 3). Auf den Schraubstutzen 40 ist ein Verschluß in Form eines Tankdeckels 42 aufgeschraubt, wobei zwischen dem Tankdeckel 42 und dem Stutzen 40 bzw. der Außenseite des Flansches 28 ein O-Ring 44 angeordnet ist, um in diesem Bereich eine Abdichtung bezüglich des Tanks, des Deckels und des Rücklauffilters zu erzielen. Zwischen der Innenseite des Deckels 42 und der Oberseite des Filtergehäuses 24 bzw. des Filtereinsatzes 38 ist ein Zwischenraum 46 gebildet. Das Hydraulikmedium, das über den Rücklaufschlauch 20 und den Anschlußstutzen 30 in das Rücklauffilter 22 strömt (s. Pfeil), kann über den Zwischenraum 46 in den Ringraum 48 zwischen Filtereinsatz 38 und der Innenwand des Hülsenabschnitts 26 strömen und von dort in den Durchgang 38a des Filtereinsatzes 38 (s. Pfeil). Wie in Fig. 4 erkennbar, ist der Außendurchmesser des Einsatzes 38 kleiner als der Innendurchmesser des Hülsenabschnitts 26.

Das in den Figuren dargestellte Rücklauffilter 22 weist nur 3 Teile auf, nämlich den Tankdeckel 42, das Filtergehäuse 24 und den Filtereinsatz 38. Die Herstellung gestaltet sich daher besonders wenig aufwendig. Zum Wechseln des Filtereinsatzes 38 braucht lediglich der Tankdeckel 42 abgeschraubt werden.

Sollte an den Anschlußstellen des Rücklaufschlauches 20 ein Leck auftreten oder der Schlauch seinerseits brüchig werden, läuft das Medium nicht nach außen, sondern verbleibt im Tank 16.

Bezüglich der Ausführungsform nach Fig. 4 sei nachgetragen, daß der Durchgang 38a am oberen Ende gegenüber dem Zwischenraum 46 durch ein Rückschlagventil 50 abgesperrt ist. Es öffnet sich lediglich bei einem vorgegebenen Druck in Zwischenraum 46. In diesem Fall strömt das Öl ungefiltert in den Tank zurück.

Bezüglich Fig. 5 sei noch erwähnt, daß an der Unterseite des radialen Flansches 28 zwei Vorsprünge 52, 54 geformt sind, die mit entsprechenden Ausnehmungen (nicht gezeigt) des Schraubstutzens 28 zusammenwirken. Dadurch wird erreicht, daß das Gehäuse 24 in einer vorgegebenen Drehlage in den Stutzen 28 und damit in den Tank 16 eingesetzt wird.

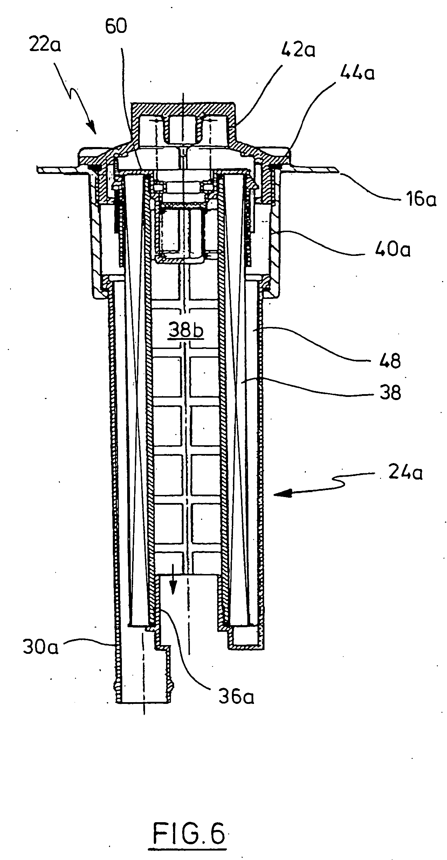

Bei der alternativen Ausführungsform nach Fig. 6 sind mit der Ausführungsform nach Fig. 4 gleiche Teile mit gleichen Bezugszeichen versehen, denen ein Index a hinzugefügt ist. Identische Teile sind ohne einen zusätzlichen Index bezeichnet.

Man erkennt bei Fig. 6, daß ein Anschlußstutzen 30a für einen nicht gezeigten Schlauch am unteren Ende des hülsenartigen Filtergehäuses 24a ausgebildet ist. Das über den Schlauch rückfließende Öl gelangt in den Zwischenraum 48 zwischen Filtereinsatz 38 und zugeordneter Innenwand des Gehäuses 24a und fließt von dort über den Filtereinsatz in den Durchgang 38b und von dort wieder nach unten entsprechend den eingezeichneten Pfeilen.

Es ist auch denkbar, den Schlauchanschlußstutzen 30a seitlich an der Wandung des Gehäuses 24a anzuformen.

In Fig. 6 ist ein Stutzen 40a in das Innere des Tanks 18a hineingführt. Er weist ein Innengewinde auf zur Aufnahme des Außengewindes des Deckels 42a. Der Stutzen 40a hat einen radial nach innen gerichteten Flansch am unteren Ende, auf den ein radialer Flansch des Gehäuses 24a abgesetzt ist. Auf das obere Ende des Filtergehäuses 24a ist ein Verschluß 60 aufgesetzt, der den Durchgang 38b und den Filtereinsatz 38 nach oben abschließt. Er kann im Bereich des Durchgangs 38b mit einer Drosselöffnung oder einem nicht weiter dargestellten Ventil versehen werden entsprechend der Wirkung des Ventils 50 nach Fig. 4.

## Patentansprüche

1. Hydraulikaggregat für Flurförderzeuge, mit einer Motorpumpeneinheit (12), die unmittelbar an einem Tank (16) angesetzt ist, einem Rücklauffilter (22), das ein längliches Filtergehäuse (24) für ein Filterelement (38), das über eine Öffnung in den Tank (16) einführbar ist, einen Schlauchanschluß (30) sowie eine Auslaßöffnung aufweist, wobei das Filterelement (38) im Strömungsweg zwischen dem Schlauchanschluß (30) und der Auslaßöffnung angeordnet ist, einem Rücklaufschlauch (20) zwischen Motorpumpenheinheit und dem Schlauchanschluß (30) und einem Verschluß (42) für das Rücklauffilter (22), **dadurch gekennzeichnet, daß** der Rücklaufschlauch (20) innerhalb des Tanks (16) verläuft und der Schlauchanschluß (30) innerhalb des Tanks angeordnet ist.

2. Hydraulikaggregat nach Anspruch 1, **dadurch gekennzeichnet, daß** die Öffnung von einem den Verschluß bildenden, Tankdeckel (42, 42a) verschließbar ist, das Filtergehäuse (24) an dem dem Deckel (42) zugewandten Ende eine radiale Erweiterung (28) aufweist, an den der Schlauchanschluß angeformt ist und der Deckel (42) so auf dem Gewindestutzen (40) des Tanks (16) aufschraubbar ist, daß zwischen dem zugewandten Ende des Filtergehäuses (24) und dem Deckel (42) ein Zwischenraum (46) gebildet ist, der das Innere des Filtergehäuses (24) mit dem Schlauchanschluß (30) verbindet.

3. Hydraulikaggregat nach Anspruch 1, **dadurch gekennzeichnet, daß** der Schlauchanschluß (30a) an dem dem Innern des Tanks (16a) zugekehrten Ende des Filtergehäuses (24a) vorgesehen ist.

4. Hydraulikaggregat nach Anspruch 1, **dadurch gekennzeichnet, daß** das Filtergehäuse (24, 24a) und der Schlauchanschluß (30, 30a) einteilig aus Kunststoff geformt sind.

5. Hydraulikaggregat nach einem der Ansprüche 1 bis 4, **dadurch gekennzeichnet, daß** zwischen dem Verschluß (42) und einem kreisförmigen Umfangsabschnitt des Filtergehäuses (24) sowie dem freien Ende eines Schraubstutzens (40) ein Dichtring (44) angeordnet ist.

6. Hydraulikaggregat nach einem der Ansprüche 1 bis 5, **dadurch gekennzeichnet, daß** am Filtergehäuse (24) Vorsprünge (52, 54) vorgesehen sind, die mit Ausnehmungen oder Vorsprüngen der Öffnung zusammenwirken für eine vorgegebene Drehlage des Filtergehäuses (24).

## Claims

1. A hydraulic unit for industrial trucks, comprising a motor pump unit (12) which is directly attached to a tank (16), a reflux filter (22) which has an elongate filter casing (24) for a filtering element (38) adapted to be introduced into the tank (16) through an opening, a hose coupling (30), and an outlet opening, wherein the filtering element (38) is disposed in the flow path between the hose coupling (30) and the outlet opening, a reflux hose (20) between the motor pump unit and the hose coupling (30), and a closure (42) for the reflux filter (22), **characterized in that** the reflux hose (20) extends within the tank (16) and the hose coupling (30) is disposed within the tank.

2. The hydraulic unit according to claim 1, **characterized in that** the opening is adapted to be closed by a tank lid (42, 42a)which is forming the closure, the end of the filter casing (24) that faces the lid (42) has a radial enlargement (28) to which the hose coupling is formed, and the lid (42) is adapted to be screwed onto the threaded socket (40) of the tank (16) such as to form a space (46) which connects the interior of the filter casing (24) to the hose coupling (30), between the end of the filter casing (24) that faces the lid and the lid (42).

3. The hydraulic unit according to claim 1, **characterized in that** the hose coupling (30a) is provided at the end of the filter casing (24a) that faces the interior of the tank (16a).

4. The hydraulic unit according to claim 1, **characterized in that** the filter casing (24, 24a) and hose coupling (30, 30a) are integrally formed from a plastic.

5. The hydraulic unit according to any one of claims 1 to 4, **characterized in that** a sealing ring (44) is disposed between the closure (42) and a circular circumferential portion of the filter casing (24) and the free end of a threaded socket (40).

6. The hydraulic unit according to any one of claims 1 to 5, **characterized in that** projections (52, 54) are provided on the filter casing (24) which interact with recesses or projections of the opening for a predetermined rotational position of the filter casing (24).

## Revendications

1. Groupe hydraulique pour chariots de manutention, comprenant une unité de pompe à moteur (12) montée directement sur un réservoir (16), un filtre de retour (22) comportant un boîtier de filtre allongé (24) pour un élément filtrant (38) pouvant être introduit par une ouverture dans le réservoir (16), un raccord de tuyau (30) ainsi qu'une ouverture de sortie, l'élément filtrant (38) étant disposé dans la voie d'écoulement entre le raccord de tuyau (30) et l'ouverture de sortie, un tuyau de retour (20) entre l'unité de pompe à moteur et le raccord de tuyau (30), et une fermeture (42) du filtre de retour (22), **caractérisé en ce que** le tuyau de retour (20) est logé à l'intérieur du réservoir (16) et que le raccord de tuyau (30) est disposé à l'intérieur du réservoir.

2. Groupe hydraulique selon la revendication 1, **caractérisé en ce que** l'ouverture peut être fermée par un couvercle de réservoir (42, 42a) qui forme la fermeture, que le boîtier de filtre (24) comprend un élargissement radial (28) à l'extrémité faisant face au couvercle (42), sur laquelle est formé le raccord de tuyau, et que le couvercle (42) peut être vissé de telle manière sur l'embout fileté (40) du réservoir (16) qu'un espace (46) se forme entre l'extrémité frontale du boîtier de filtre (24) et le couvercle (42), espace qui relie l'intérieur du boîtier de filtre (24) au raccord de tuyau (30).

3. Groupe hydraulique selon la revendication 1, **caractérisé en ce que** le raccord de tuyau (30a) est disposé sur l'extrémité du boîtier de filtre (24a) orienté vers l'intérieur du réservoir (16a).

4. Groupe hydraulique selon la revendication 1, **caractérisé en ce que** le boîtier de filtre (24, 24a) et le raccord de tuyau (30, 30a) sont formés en une pièce à partir d'une matière synthétique.

5. Groupe hydraulique selon l'une des revendications 1 à 4, **caractérisé en ce qu'**un anneau d'étanchéité (44) est disposé entre la fermeture (42) et une section périphérique circulaire du boîtier de filtre (24) d'une part, et l'extrémité libre d'un manchon fileté (40) d'autre part.

6. Groupe hydraulique selon l'une des revendications 1 à 5, **caractérisé en ce que** des parties en saillie (52, 54) sont prévues sur le boîtier de filtre (24), qui coopèrent avec des encoches ou des éléments en saillie sur l'ouverture, en vue d'une position rotative prédéterminée du boîtier de filtre (24).
